# EUROPÄISCHE PATENTSCHRIFT

(11) **EP 1 606 147 B1**
(45) Veröffentlichungstag und Bekanntmachung des Hinweises auf die Patenterteilung: **02.05.2007**
(21) Anmeldenummer: 04706178.3
(22) Anmeldetag: 29.01.2004
(51) Int. Cl.: B60R 21/015

(54) **SYSTEM UND VERFAHREN ZUM ERKENNEN DER SITZBELEGUNG IN EINEM FAHRZEUG**
SYSTEM AND METHOD FOR IDENTIFYING SEAT OCCUPANCY IN A VEHICLE
SYSTEME ET PROCEDE PERMETTANT DE DETECTER L'OCCUPATION D'UN SIEGE DE VEHICULE

(30) Priorität: 21.03.2003 DE 10312740
(43) Veröffentlichungstag der Anmeldung: 21.12.2005
(73) Patentinhaber: SIEMENS AKTIENGESELLSCHAFT, 80333 München (DE)
(72) Erfinder: HOFBECK, Klaus, 92318 Neumarkt (DE); KLEMENT, Thomas, 93059 Regensburg (DE); RÖSEL, Birgit, 93055 Regensburg (DE); STIELOW, Arnd, 93059 Regensburg (DE); STIPPLER, Michael, 92421 Schwandorf (DE)
(86) Internationale Anmeldenummer: PCT/EP2004/000808
(87) Internationale Veröffentlichungsnummer: WO 2004/083004

(56) Entgegenhaltungen:
- DE-A- 19 957 536
- DE-A- 19 957 557
- US-B1- 6 199 904
- US-B1- 6 462 701

## Beschreibung

Die vorliegende Erfindung betrifft ein Verfahren zum Erkennen der Sitzbelegung in einem Fahrzeug gemäß dem Oberbegriff von Anspruch 1 und ein dementsprechend ausgebildetes System nach dem Oberbegriff von Anspruch 11.

Aus der Patentschrift US 6,199,904 B1, welche die Merkmale der unabhängigen Ansprüche 1 und 11 zeigt, ist beispielsweise eine derartige Vorrichtung zum Erkennen einer Sitzbelegung bekannt, bei der ein Hochfrequenzsender hochfrequente Strahlung auf einen hinsichtlich der Sitzbelegung zu überwachenden Sitz aussendet, wobei der Sitz eine reflektierende Oberfläche aufweist. Im unbelegten Zustand dieses Sitzes wird die Hochfrequenzstrahlung durch die Oberfläche reflektiert und zu einem Empfänger übertragen. In dem Empfänger wird die empfangene reflektierte Strahlung als Signal hinsichtlich einer Strahlungsintensität ausgewertet. Wenn eine Person auf diesem Sitz Platz genommen hat, so werden die Strahlen durch den Körper der Person so stark gedämpft, dass die Belegung dieses Sitzplatzes in jedem Fall anhand einer deutlichen Intensitätsminderung des zu dem Empfänger rückgesandten reflektierten Signals erkannt werden kann.

Firmenintern wurde vorgeschlagen, als Hochfrequenz-Sender- und -Empfangseinheiten in einem Sitzbelegungsüberwachungssystem Transceiver-Systeme zu verwenden, wie sie bekanntlich bereits in Zugangskontroll- und Fahrzeugstartsystemen in Kraftfahrzeugen verwendet werden. Als Hintergrundinformation zum Einsatz hochfrequenter Transceiver-Systemen für ein Diebstahl-Schutzsystem in einem Kraftfahrzeug wird beispielsweise auf die Offenbarung der deutschen Offenlegungsschrift DE 199 57 536 A1 hingewiesen. Mit derartigen Vorrichtungen kann anhand der Laufzeit der Signale die Entfernung zwischen einem Transceiver und einem jeweiligen Reflektor ermittelt werden. Aus der Kenntnis der Lage und Position eines betreffenden Sitzplatzes können dann die von dem jeweiligen Reflektor reflektierten Signale von sonstigen Streusignalen der Umgebung unterschieden werden, sodass anhand der Intensität der empfangenen Signale sicher festgestellt werden kann, wenn eine Person auf einem Sitz Platz genommen hat.

Ferner wurde firmenintern vorgeschlagen, bei einem Einsatz von mehr als einem Sitzplatz in einem Fahrzeug als Reflektoren so genannte Backscatter-Systeme zu verwenden, bei denen die reflektierten Signale mit einem individuell einstellbaren festen Code moduliert werden. Solche modulierende Backscatter sind beispielsweise aus der deutschen Offenlegungsschrift DE 199 57 557 A1 für einen Einsatz in einem Identifikationssystem für ein Kraftfahrzeug bekannt. Dabei bestehen die Backscatter aus Oberflächenwellen-Elementen, die intern variabel modulierende Reflektoren aufweisen. Durch ein Backscatter-System wird ein empfangenes Signal mit einem einstellbaren Code versehen, so dass ein so umgeformtes Rücksignal z.B. von beliebigen Reflexionen metallischer Teile innerhalb eines Kraftfahrzeuges unterscheidbar ist. Damit kann bei insgesamt gemindertem Aufwand eine Verbesserung der Auswertungsergebnisse erreicht werden.

Aufgabe der vorliegenden Erfindung ist es, eine Vorrichtung und ein Verfahren zum Erkennen einer Sitzplatzbelegung unter Minderung eines jeweiligen apparativen Aufwandes weiterzubilden.

Diese Aufgabe wird erfindungsgemäß durch ein Verfahren mit den Merkmalen von Anspruch 1 sowie durch ein System als Vorrichtung mit den Merkmalen von Anspruch 11 gelöst.

Eine erfindungsgemäße Vorrichtung weist demnach nur eine Sendereinheit auf, um ein Wellenfeld zur Feststellung einer jeweiligen Sitzplatzbelegung in einem Fahrzeug mit mehreren zu überwachenden Sitzplätzen bereitzustellen. Durch diese Maßnahme wird ein einfach skalierbares System zur Überwachung der Belegung mehrerer Sitzplätze geschaffen. Dabei wird eine jeweilige Hochfrequenz-Sendeleistung nur geringfügig erhöht. Auch ein Mehraufwand an Elektronik zur Ansteuerung und Auswertung wächst nicht linear mit der Anzahl der zu überwachenden Sitzplätze. Damit wachsen auch Raumbedarf und Herstellungskosten nicht linear mit der Sitzplatzzahl. Ferner wird eine erforderliche Leistungsaufnahme zur Schonung von insbesondere in einem Kraftfahrzeug nur begrenzt verfügbaren Energievorräten gesenkt.

Vorteilhafterweise ist ein erfindungsgemäßer Ansatz auch auf die nachfolgend beschriebenen, bereits durch die Anmelderin vorgeschlagene Systeme und Verfahren anwendbar:

Auf der eingangs beschriebenen Verwendung von Backscatter-Systemen als Reflektoren aufbauend wurde von der Anmelderin in der DE 102 54 197 ein System und Verfahren zur Erkennung der Sitzbelegung in einem Kraftfahrzeug offenbart, bei dem eine Sitzplatz-Unterscheidung auf der Grundlage jeweils unterscheidbar modulierter bzw. codierter Signalrückstreuung unter Verwendung von Backscatter-Systemen in den jeweiligen Sitzplätzen vorgeschlagen wird. Das ist auch unter Verwendung nur einer einzigen Sende- und Empfangseinheit möglich.

Firmenseitig wurde im Rahmen der DE 102 54 198 vorgeschlagen, unter Nutzung der bei hochfrequenter elektromagnetischer Strahlung im wesentlichen Maße auftretenden Beugungserscheinungen eine Untersuchung der Belegung von Sitzplätzen in einem Kraftfahrzeug auf der Grundlage von speziellen Beugungsmustern durchzuführen.

Ferner wurde firmenintern in der DE 102 54 202 eine Erfassung einer Belegung von Sitzplätzen in einem Kraftfahrzeug durch sequentielle Intensitätsmessung einer jeweiligen Rückstreuung bei zeitweiligem An- und Abschalten von Reflektorelementen an den jeweiligen Sitzplätzen vorgeschlagen. Hierdurch wäre es beispielsweise möglich, dass unter Verwendung einer Sende- und Empfangseinheit in Form eines Transceivers nur die Rückstreuung jeweils eines Sitzplatzes ausgewertet werden könnte. Durch zeitlich fortschreitendes Schalten der Reflektorelemente würde dann ein Belegungszustand in einem Fahrzeug erfasst werden.

Alternativ kann eine Strahlschwenkung einer Hauptkeule des von dem Sender ausgehenden Wellenfeldes durchgeführt werden. Diese wird vorzugsweise elektronisch durchgeführt, wie aus Flugfeld-Überwachungssystemen als Teilen der Radartechnik her bekannt.

Bei bekannten und vorveröffentlichten Vorrichtungen zum Erkennen der Position einer Person auf einem Sitz eines Kraftfahrzeuges besteht insbesondere der Nachteil, dass gar nicht oder nicht mit ausreichender Genauigkeit erkannt werden kann, ob eine Person auf dem Fahrzeugsitz Platz genommen hat, oder ob sie sich nur vorgebeugt oder schräg auf dem Sitzplatz sitzend aufhält. Es wird lediglich die Intensität der empfangenen Signale ausgewertet, d. h. es wird nur die Dämpfung beim ein- oder zweimaligen Durchgang der elektromagnetischen Strahlung durch einen menschlichen Körper ausgenutzt. Als eine Lösung dieses Problems wurde weiterhin firmenintern und nicht vorveröffentlicht in der DE 102 54 200 gezielt für die Erkennung einer so genannten Out-of-Position-Situation ein Verfahren zur Messung der Intensität einer durch ein Mehrzahl von Reflektoren je Sitzplatz rückgestreuten hochfrequenten Strahlung offenbart. Die Besonderheit einer derartigen Vorrichtung liegt darin, dass die Reflektoren als Einzelelemente örtlich an einem Sitz derart verteilt angeordnet sind, dass es zu einer vermehrten Freigabe vormals in normaler Sitzposition abgedeckter Reflektoren beim fortschreitenden Vorlehnen einer auf diesem betreffenden Sitzplatz sitzenden Person kommt, wodurch die Intensität des insgesamt reflektierten elektromagnetischen Signals signifikant erhöht wird.

Im Rahmen der ebenfalls firmenintern vorgeschlagenen und unter der Anmeldenummer DE 102 54 201 eingereichten Patentanmeldung wird zudem als Vorrichtung und Verfahren zum Erkennen der Position einer Person auf einem Sitz eines Kraftfahrzeugs eine Intensitätsmessung eines durch eine Mehrzahl von Reflektoren an einem jeweiligen Sitzplatz reflektierten elektromagnetischen Strahlung vorgeschlagen. Dabei sind die Reflektoren an dem Sitz auch randseitig und außerhalb einer Abdeckungszone durch eine Person verteilt derart angeordnet, dass neben einer vorstehend beschriebenen Art einer Positionserkennung bzw. Sitzhaltung einer auf einem Sitzplatz sitzenden Person auch eine Diagnose oder ein Selbsttest des gesamten Systems durchgeführt werden kann. Dabei sind die randseitig außerhalb eines eigentlichen Abdeckungsbereiches angeordneten Diagnose-Reflektoren auch als zu- oder abschaltbare Reflektoren vorgeschlagen worden.

Zum verbesserten Erkennen der Position einer Person auf einem Sitz eines Kraftfahrzeugs wird weiterhin vorgeschlagen, dass je Sitzplatz mindestens ein Reflektor in oder an einem zugehörigen Sicherheitsgurt angeordnet ist. Diese Anordnung des mindestens einen Reflektors je Sicherheitsgurt ist dabei derart gewählt, dass beim Schließen des Gurtes der mindestens eine Reflektor in eine Position eines von dem Hochfrequenzsender ausgehenden Wellenfeldes hineinbewegt wird, indem er wesentlich mehr elektromagnetische Hochfrequenzenergie empfängt und dementsprechend zurücksendet als in einer geöffneten Passivlage des Gurtes. Damit gerät der jeweilige Reflektor im Wesentlichen erst durch das Anschnallen einer Person oder eines Gegenstandes auf einem Sitzplatz eines Kraftfahrzeugs gleichsam in das Blickfeld einer hochfrequent arbeitenden Sende- und Empfangseinheit.

Diesbezüglich durchgeführte Messungen haben, wie nachfolgend noch unter Bezugnahme auf ein Ausführungsbeispiel der vorliegenden Erfindung näher beschrieben wird, einen mehrere Dekaden umfassenden Intensitätsunterschied zwischen der in einer Passivlage und einer Aktivlage des Gurtes durch den Reflektor reflektierten hochfrequenten elektromagnetischen Energie ergeben.

Da der Gurt, und damit auch die Reflektoren, selbst in einem Out-of-postion-Fall innerhalb des Wellenfeldes verbleiben, kann dieser Sonderfall einer Belegung in einer erfindungsgemäßen Vorrichtung mit erhöhter Sicherheit erkannt werden. Dabei wird in vorteilhafter Weise ein bereits in einem Kraftfahrzeug vorhandenes System mit genutzt, so dass sich der Mehraufwand in Wesentlichen in der Anbringung zusätzlicher Reflektoren in oder an dem jeweiligen Sicherheitsgurt und einer funktionalen Erweiterung einer Auswertung der empfangenen Signale erschöpft.

In einer Weiterbildung der Erfindung wird der Gurt, und damit mindestens ein Reflektor, in einer geöffneten Passivlage in einen im Wesentlichen elektromagnetisch geschirmten Bereich eingezogen. Vorzugsweise wird der Gurt dazu in bekannter Weise aufgerollt, wobei nun ein Stauraum des Aufrollmechanismus durch eine Metallisierung elektromagnetisch abgeschirmt ist.

In verschiedenen Ausführungsformen der Erfindung wird ein jeweils reflektiertes Signal in der Auswerteeinrichtung hinsichtlich seiner Intensität und/oder einer jeweiligen Signallaufzeit untersucht. Die Untersuchung einer jeweiligen Intensität des reflektierten Signals liefert ein sehr deutlich auswertbares Unterscheidungskriterium dazu, ob ein Gurt an einem Sitzplatz zum Schutz einer Person oder eines Gegenstandes an einem Sitzplatz geschlossen ist. Durch eine Untersuchung von Laufzeitunterschieden wird ein Abstand des jeweiligen Gurtes von einer Rückenlehne eines jeweiligen Sitzplatzes messbar. Je nach Muster kann auf dieser Basis in der Auswerteeinheit auch zwischen einem dickeren Fahrgast und einer Out-of-position-Situation unterschieden werden.

In einer besonders vorteilhaften Ausführungsform der Erfindung wird ein erfindungsgemäßes Verfahren in Kombination mit den eingangs beschriebenen und im Wesentlichen firmenseitig vorgeschlagenen Verfahren eingesetzt. Es wird dabei insgesamt ein reflektiertes Signal ausgewertet, das sowohl von mindestens einem Reflektor im Bereich des Sicherheitsgurtes und von mehreren Reflektoren stammt, die in vorstehend beschriebener Weise über die Fläche eines Sitzplatzes verteilt angeordnet sind. Die Reflektoren dieser grundsätzlich voneinander verschiedenen beiden Anordnungsarten sind vorteilhafterweise durch die Verwendung von Backscatter-Systemen auch in dem reflektierten elektromagnetisch hochfrequenten Signal unterscheidbar. Damit wird in redundanter Weise die Belegung eines jeweiligen Sitzplatzes festgestellt, wobei nun in besonders vorteilhafter Weise auch eine Out-of-position-Situation in wesentlich verbesserter und zuverlässigerer Weise messtechnisch erfasst wird. Während durch das Vorlehnen einer Person auf den Sitzplatz aus einer normalen Sitzhaltung heraus vermehrt hinter der Person angeordnete Reflektoren im Bereich beispielsweise einer Rückenlehne freigegeben werden und so auch einen eventuell nicht belegten oder nicht sicher belegten Sitzplatz vorspiegeln könnten, zeigt der mindestens eine Reflektor an dem Sicherheitsgurt nach wie vor zuverlässig eine Belegung dieses Sitzplatzes an. Dabei wird im Zuge des Vorlehnens der Person auf dem Sitzplatz auch der Gurt und damit ebenfalls der mindestens eine daran befestigte Reflektor weiter von einer Rückenlehne des betreffenden Sitzplatzes weg hin auf die Sende- und Empfangseinheit zu bewegt. Diese Änderung der Lage ist im Rahmen einer Entfernungsmessung als zusätzliches Indiz für eine Out-of-position-Situation erfassbar, wie vorstehend in anderem Zusammenhang bereits ausgeführt.

Eine Kombinationslösung kann jedoch auch darin bestehen, dass zur Aktivierung von z.B. semiaktiven oder aktiven Reflektoren an einem Sitzplatz eine Freischaltung über einen Gurtschloss-Sensor erfolgt. Ferner kann das Schließen des Gurtes auch zur Ausbildung eines elektrischen Kontakts über das Gurtschloss selber genutzt werden. Semiaktiven oder aktiven Reflektoren können dabei in dem Sitzplatz und/oder in dem Gurt selber angeordnet sein.

Damit ist vorstehend insgesamt ein System beschrieben worden, in dem mit nur einer Sendeeinheit ein hochfrequentes elektromagnetisches Wellenfeld vorzugsweise innerhalb einer Fahrgastzelle eines Kraftfahrzeugs erzeugt wird. Das Wellenfeld leuchtet einen Raum aller zulässigen Sitz- und/oder Stellplätze in einem mit Personen und/oder Lasten zu besetzenden Kraftfahrzeug aus. Diese Sitzplätze sind entsprechend einem oder mehreren der eingangs genannten und firmenseitig offenbarten Human-Observation-by-Beam-Interference-Technology- bzw. HOBBIT-Verfahren mit entsprechenden HOBBIT-Reflektoren zur Erkennung einer jeweiligen Sitzplatzbelegung ausgestattet. Auch eine jeweilige Art der Belegung kann in der vorstehend beschriebenen Weise sicher erkannt werden, wobei z. B. neben dem Fall einer Out-of-position-Situation auch unterschieden werden kann, ob sich ein großer Erwachsener, ein leichter und kleiner Mensch, wie beispielsweise ein Kind, oder ein Kleinstkind in einer Liege, oder aber eine Last z.B. in Form eines Gepäckstücks etc., auf einem Sitzplatz sich befindet.

Neben Laufzeitmessungen werden vor allem Pegelmessungen auf den Frequenzen der verschiedenen Rück- bzw. Reflexionssignale der Reflektoren durchgeführt. Derartige Messverfahren sind aufgrund der Einfachheit der durchzuführenden Auswertungen sehr schnell. So ist auch eine dynamische Messung möglich. Eine jeweilige Sitzplatzbelegungs- und Positionsbestimmung kann damit auch erst im Fall eines Umfalls ab dem Moment eines Aufpralls durchgeführt werden. Ein Auslöser für eine derartige Messung kann ein Frühwarn-Signal sein, das beispielsweise von einem Pre-Crash-Sensor an einer Fahrzeug-Außenseite bei zu großer negativer Beschleunigung oder beginnender Deformation ausgelöst wird. Auch Radar-Abstandssensoren oder andere Unfall-Vorwarnsysteme können als Signalgeber fungieren.

Eine Auslösung der vorstehenden Art für eine dynamische Messung ermöglicht zudem, eine Belastung der Fahrzeuginsassen durch Mikrowellenstrahlung durch eine Intervall-Schaltung der System-Strahlungsleistung auf ein Minimum zu reduzieren. Die vorgeschlagene Belegungsmessung wird auf einen Gefahrenfall konzentriert, der auf der Basis von Pre-Crash-Sensoren vermutet wird. Aber auch in Situationen, in denen die Fahrzeuginsassen in Lebensgefahr schweben können, bleibt die Strahlungsleistung vergleichsweise gering:
- Ein normales Mobiltelefon sendet bei etwa 1,8GHz ca. 1000 mW beim Telefonieren aus;
- Ein schnurloses Festnetztelefon nach dem DECT-Standard ist bei 1,9GHz mit 250 mW immer aktiv (also auch dann, wenn nicht telefoniert wird) und
- Bluetooth-Komponenten senden abhängig von einem jeweiligen Betriebsmodus bei 2,4GHz mit ca. 100 mW aktiver Leistung.

Eine im Rahmen der vorliegenden Erfindung erforderliche Sendeleistung bei 2,4GHz beläuft sich auf < 1mW. Zudem wird diese Leistung nur dann ausgesendet, wenn einer oder mehrere voneinander unabhängige Indikatoren von einer Unfallsituation ausgehen.

Eine jeweils für die Messungen einer Sitzplatzbelegung benötigte Zeit beträgt nur wenige Millisekunden. Diese Messzeiten sind damit auch gegenüber der Gesamtdauer eines Unfallherganges ausreichend kurz. Aufgrund dieser sehr kurzen Messzeiten ist es möglich, durch die Steuerung eines Airbags eines tatsächlich auch belegten Sitzplatzes eine bestimmte Dynamik zu realisieren, die in Abhängigkeit einer jeweiligen Sitzposition oder Neigung einer Person, deren Größe und/oder Gewicht angepasst ist. Nach dem Zünden eines Airbags wird die Dynamik vorzugsweise durch eine gezielte Druckminderung beeinflusst.

Auch die Ansteuerung eines Gurtstraffers kann auf der Basis der Ergebnisse einer dynamischen Messung einer jeweiligen Sitzplatzbelegung zur effektiven Gefahrabwehr bei einem Unfall genutzt werden. Die Bedeutung eines gerade in einer Unfallsituation straff an einer jeweiligen Person anliegenden Sicherheitsgurtes ist sehr hoch. Untersuchungen haben hierzu ergeben, dass ein Sicherheitsgurt mit Gurtstraffer ca. 90% an Sicherheit bringt. Ein Beifahrer-Airbag wird dagegen wesentlich geringer bewertet. Einem Gurtstraffer kann, wie vorstehend zum Airbag beschrieben, durch die Information über eine angeschnallte und vorgelehnte Person eine intelligentere Funktionalität verliehen werden: Der Gurtstraffer kann beim Unfall aufgrund einer dynamischen Messung der Belegung des jeweiligen Sitzplatzes eine mehrstufige Reaktion mit der Abstandsinformation bzw. Neigungsposition des Fahrgastes als Sensierung ausführen. Bei der Unterscheidung der Sicherheit einer gut und einer schlecht angeschnallten Person in einem Unfall wurde festgestellt, dass bereits ca. 3cm zu viel Gurtlänge eine wesentlich verschlechterte Sicherheit und eine signifikant erhöhte Verletzungsgefahr bewirken können.

Als Messung und daraufhin bewirkte Einstellung auch außerhalb eines Unfallgeschehens kann schließlich auch die Anpassung einer Kopfstütze ausgeführt werden. Eine Ansteuerung einer motorisch einstellbaren Kopfstütze bzw. Höhenregulierung auf der Basis von Größenschätzungen der Signalauswertung aus der Sitzplatzüberwachung kann erst effektiv als Maßnahme zur Verhinderung von Schleudertraumata und Halswirbelsäulen- bzw. HWS-Syndromen bei Verkehrsunfällen herangezogen werden. Sie kann aber auch aufgrund der damit verbundenen Mehrkosten als reines Komfort-Merkmal nachrangig bewertet werden.

Für ein derartiges System bieten sich unter Verwendung der von einer Auswerteeinheit ausgegebenen Ausgangssignale verschiedene Anwendungsmöglichkeiten an:
a. Ansteuerung bzw. Trigger für Komfortanwendungen in einem Fahrzeug
b. Trigger für eine komfortable Bedienung nach einem passiven Zugangskontroll- und Startsystem bzw. Passive-Startand-Entry Ansatz, abgekürzt als PASE, und
c. Informationsquelle für Sicherheitsanwendungen.

Weitere vorteilhafte Ausgestaltungen sind Gegenstand der jeweiligen Unteransprüche.

Die vorliegende Erfindung wird nachfolgend zur Darstellung weiterer Merkmale und Vorteile unter Bezugnahme auf die beigefügte Zeichnung anhand bevorzugter Ausführungsbeispiele näher erläutert. Es zeigen:
- Figur 1:: eine schematische Darstellung eines BelegungsÜberwachungssystems in einem Kraftfahrzeug mit 5 Sitzplätzen;
- Figur 2:: eine skizzierte Draufsicht auf den Fahrersitz von Figur 1 bei unterschiedlicher Belegung durch eine angeschnallte Person;
- Figur 3:: die Ansicht von Figur 2 in einer Passivstellung des Sicherheitsgurt-Systems;
- Figur 4:: eine seitliche Schnittdarstellung der Fahrersitzposition von Figur 1;
- Figur 5:: eine Draufsicht auf den Sitzplatz von Figur 4 mit in dem Sitz befindlichen Reflektoren;
- Figur 6:: eine diagrammartige Darstellung einer Intensitätsverteilung und
- Figur 7:: eine skizzierte Darstellung eines Out-of-Position-Falls mit verbesserter Detektion.

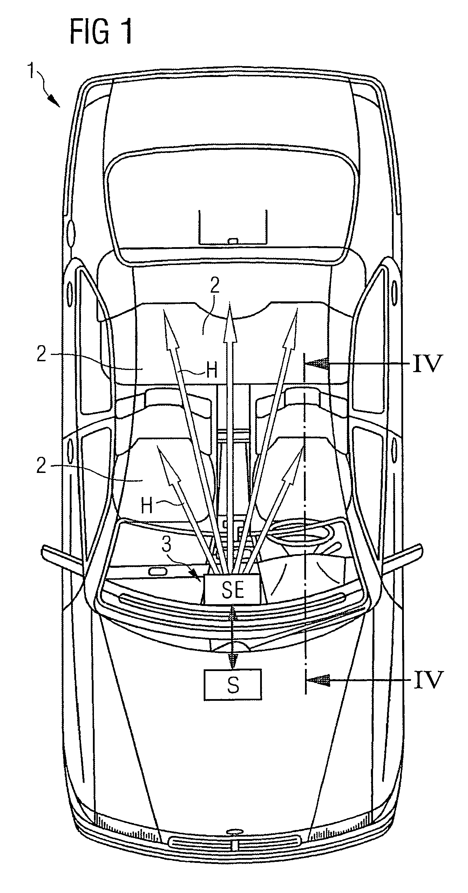

In schematischer Darstellung ist in Figur 1 ein Kraftfahrzeug 1 mit fünf Sitzplätzen 2 gezeigt. Nach dem eingangs beschriebenen Stand der Technik würde zur Detektion einer Sitzplatzbelegung für jeden der Sitzplätze 2 durch ein eigenständiges Erkennungssystem 3 mit einer Steuereinheit S, einer Sende- und Empfangseinheit SE und einem von dieser ausgehenden Strahlungsfeld H ein jeweiliger Sitzplatz abgedeckt werden. Hier ist hingegen ein erfindungsgemäßes Erkennungssystem 3 vorgesehen worden, in dem alle Sitzplätze 2 durch das Wellenfeld H einer Sendereinheit erreicht werden.

Unter Umsetzung eines der ebenfalls eingangs kurz beschriebenen, bislang nur firmenseitig vorgeschlagenen Verfahren zum Erkennen der Sitzplatzbelegung würde durch Verwendung von Backscatter-Reflektoren der apparative Aufwand auf der Seite der Sende- und Empfangseinheiten SE gemindert. Durch unterschiedliche und voneinander unterscheidbare Codierung der jeweiligen Rückstreusignale von einem jeden Sitzplatz 2 kann auch unter Verwendung nur eines hochfrequentes Wellenfeldes eine Detektion beispielsweise gemäß der Lehre der US 6,199,903 B1 durchgeführt werden.

Bekannte Vorrichtungen weisen signifikante Nachteile hinsichtlich ihrer Zuverlässigkeit bei der Erkennung einer Sitzplatzbelegung, insbesondere in einem so genannten Out-of-Position-Fall, auf. Von einer Out-of-Position-Situation spricht der Fachmann in dem Fall, dass sich eine Person auf einem Fahrzeugsitzplatz 2 befindet und sich dabei jedoch beispielsweise durch starkes Vorbeugen oder eine sehr schräg zu einer normalen Sitzhaltung verlaufende Sitzposition aufhält. Hierdurch wird in bekanntem Verfahren zum Nachweis einer Sitzplatzbelegung durch vermehrte Freigabe mindestens eines Reflektors wesentlich mehr hochfrequente Energie des Strahlungsfeldes zu einer Empfängereinheit zurückgeworfen, als dies im normalen Belegungsfall auftreten würde. Damit kann in ungünstigen Fällen die Situation eintreten, dass ein in Wirklichkeit belegter Sitzplatz fehlerhafterweise als unbelegt durch ein System 3 bewertet wird.

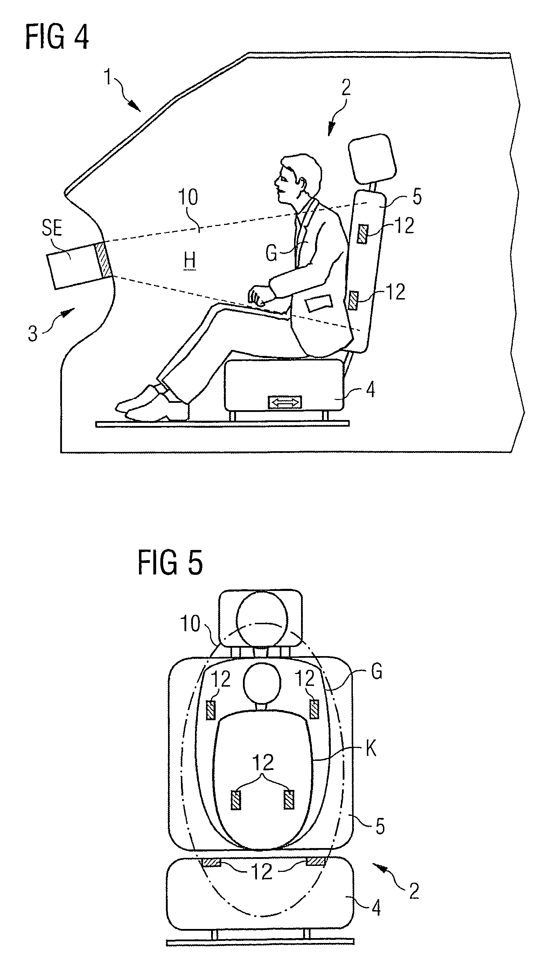

Ein ebenso gravierendes Problem tritt bei einer Kopplung bekannter Sitzplatzbelegungssysteme 3 mit aktiven Sicherheitskomponenten eines Kraftfahrzeugs 1 auf, beispielsweise bei einer Ansteuerung eines Airbag-Systems. In einer Out-of-Position-Situation ist eine Person auf dem Sitzplatz im Regelfall nach vorne übergebeugt, so dass eine Kopf-Hals-Schulter-Partie aus einer Normalposition einer sitzenden Person weit hin in Richtung auf einen Airbag verlagert angeordnet ist. Ein unbeeinflusstes Auslösen dieses Airbags in der vorstehend beschriebenen Situation kann durch die Wucht des Aufpralls des Airbags an Körperteilen der Person in einer Out-of-Position-Haltung eine lebensgefährliche Bedrohung darstellen. Zu weiteren Einzelheiten wird auf die nachfolgend noch gegebene ausführliche Beschreibung zu den Figur 4 bis 6 verwiesen.

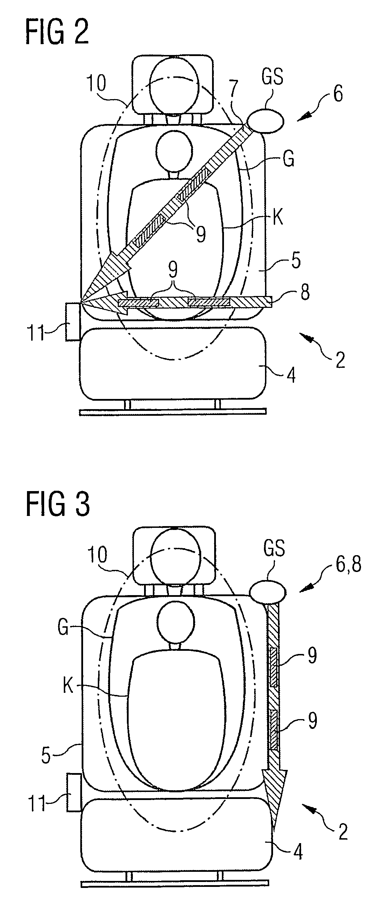

Als eine effektive Möglichkeit zur Abhilfe bei der Erkennung von Out-of-Position-Situationen wird ein Ausführungsbeispiel nachfolgend unter Bezugnahme auf die Abbildung von Figur 2 näher beschrieben. In der in Figur 2 skizzierten Draufsicht auf den Fahrersitz 2 einer bekannten Bauart ist eine mit G bezeichnete Kontur eines relativ groß gewachsenen Menschen, und mit K bezeichnete Kontur eines verhältnismäßig kleinwüchsigen Menschen, beispielsweise eines Kindes, eingezeichnet. Dabei sitzen diese beiden von der Statur her sehr unterschiedlichen Personen auf einer Sitzfläche 4 des Sitzplatzes 2 und an einer Rückenlehne 5 angelehnt. In der in Figur 2 dargestellten Situation sind beide Personen jeweils in vorschriftsmäßiger Weise durch einen bekannten Sicherheitsgurt 6 in Form eines Dreipunkt-Sicherheitsgurtes mit einem Schultergurt 7 und einem Beckengurt 8 angeschnallt. Wie aus der gewählten Darstellung in einer Draufsicht ersichtlich ist, so unterscheidet sich die Lage von Schultergurt 7 und Beckengurt 8 im Fall einer angeschnallten großen Person G nicht von dem Fall einer kleinen angeschnallten Person K.

Es ist nun mindestens ein Reflektor 9 derart in oder an dem Sicherheitsgurt 6 angeordnet, dass er bei angelegtem Sicherheitsgurt 6 in einem Ausleuchtungsbereich 10 des Wellenfeldes H positioniert ist. In dem vorliegenden Fall werden je zwei Reflektoren 9 an den Schultergurt 7 und dem Beckengurt 8 des Sicherheitsgurtes 6 derart angeordnet, dass sie bei angelegtem Gurt sich auf im Fall einer kleinen angeschnallten Person K innerhalb auch dieser Körperkontur befinden. Damit befinden sich die vier Reflektoren 9 an dem Sicherheitsgurt 6 unabhängig von der Statur einer angegurteten Person stets im Wesentlichen innerhalb des Ausleuchtungsbereiches 10 des Wellenfeldes H, so dass in der vorstehend beschriebenen Aktivstellung bei angelegtem Sicherheitsgurt 6 ein durch die Reflektoren 9 erzeugtes Rückstreusignal mit einem sehr hohen Pegel in der Empfangseinheit detektiert wird.

Analog der Darstellung von Figur 2 ist in Figur 3 der Sitzplatz 2 mit einer nicht-angeschnallten großen Person G bzw. einer nicht-angeschnallten kleinen Person K skizziert dargestellt. In diesem Fall befindet sich der Sicherheitsgurt 6 durch einen Gurtstraffer GS aufgerollt an einer Außenkante der Rückenlehne 5 des Sitzplatzes 2. Damit sind auch die in dem Gurt 6 befestigten Reflektoren 9 dem Ausleuchtungsbereich 10 des Wellenfeldes H soweit entzogen, dass elektromagnetische Strahlung nur in einem sehr geringen Anteil reflektiert wird. Der Gurtstraffer GS hat den Schultergurt 7 mit zwei Reflektoren 9 in sich aufgenommen. Da er elektromagnetisch abgeschirmt ist kann von den zwei Reflektoren 9 des Schultergurts 7 kein Rückstreusignal mehr ausgehen. Auch ohne die dargestellte Strahlformung in Form einer Hauptkeule ist damit ein signifikanter Abfall in der Intensität eines gesamten Rückstreusignals messbar, da nunmehr nur noch zwei Reflektoren 9 am Beckengurt reflektieren können. Damit ist auf der Grundlage einer generell gültigen Anschnallpflicht nach dem vorstehend beschriebenen Erkennungssystem 3 eine Erkennung der Belegung eines Sitzplatzes 2 mit sehr hoher Sicherheit durchführbar.

Unter Verwendung von semiaktiven oder aktiven Reflektoren 9 kann ein elektrischer Kontakt zu deren Aktivierung durch ein Gurtschloss 11 geschlossen werden. Damit sind die Reflektoren 9 erst bei zuverlässig eingerastetem Sicherheitsgurt 6 durch eine Versorgung mit elektrischer Energie überhaupt aktiv.

In der Abbildung von Figur 4 ist als seitliche Schnittdarstellung exemplarisch die Position des Fahrersitzes 2 von Figur 1 dargestellt. Anhand dieser Darstellung wird nun eine firmenseitig in der DE 102 54 202 vorgeschlagene Erkennungsvorrichtung einer Sitzplatzbelegung in einem Fahrzeug 1 beschrieben. In dem vorliegenden Fall sind in der Rückenlehne 5 des Sitzplatzes 2 mehrere Reflektoren 12 derart verteilt angeordnet, dass die dargestellten Reflektoren 12 bei normaler Sitzposition einer Person mit großer Statur G durch den Körper soweit abgedeckt sind, dass die elektromagnetische Strahlung des von der Sendeeinrichtung SE ausgesandten Wellenfeldes H in dem Ausleuchtungsbereich 10 im Wesentlichen absorbiert wird.

Bei der dargestellten entspannten Körperhaltung der Person durchlaufen die hochfrequenten elektromagnetischen Strahlungen den Körper der Person somit nach der Reflexion an den Reflektoren 12 ein zweites Mal. Hierdurch wird die elektromagnetische Strahlung weiter sehr stark gedämpft, sodass die Empfangseinheit in der Sende- und Empfangseinrichtung SE insgesamt auch nur ein sehr stark gedämpftes elektromagnetisches Signal von dem dargestellten Sitzplatz 2 reflektiert erhalten wird. Auf dieser Basis wird nun eine Belegungserkennung durchgeführt.

Parallel zu dieser Messung können in nicht weiter graphisch dargestellter Weise Sitzplatzunterscheidungen durch modulierte, codierte oder sonst wie unterscheidbar gehaltene Rückstreuung der elektromagnetischen Strahlung bewerkstelligt werden. Zu diesem Zweck werden gemäß der firmeninternen Lehre aus der nicht vorveröffentlichten DE 102 54 197 Backscatter-Reflektorelemente 12 in dem Sitzplatz 2 angeordnet. Sind diese Reflektoren 12 ganz oder teilweise an- und abschaltbar ausgebildet, so ergeben sich darüber hinaus Möglichkeiten einer Belegungserfassung durch An- und Abschalten der Reflektoren 12 an den jeweiligen Sitzplätzen und/oder eine Art von Selbsttest des Erkennungssystems 3. Ferner kann auf der Grundlage einer Auswertung von bei hochfrequenter elektromagnetischer Strahlung in nennenswertem Umfang auftretenden Beugungserscheinungen eine erweiterte Belegungsuntersuchung anhand von Beugungsmustern zur Unterscheidung einer Belegung durch Erwachsene, Kind oder Kleinkind etc. durchgeführt werden, wie eingangs in der Beschreibung unter Bezug auf die entsprechenden firmeninternen Vorschläge ausgeführt wurde.

Figur 5 zeigt analog der Darstellungen der Figuren 2 und 3 eine Draufsicht auf einen mit sechs Reflektoren 12 in der Sitzfläche 4 und der Rückenlehne 5 ausgestatteten Sitzplatz 2 gemäß vorstehender Beschreibung. Unter Andeutung eines Ausleuchtungsbereiches durch ein hochfrequentes Wellenfeld H sind die Körperkonturen G, K eines großen und eines kleinen Menschen relativ zu der Lage der Reflektoren 12 skizziert. Unter Verwendung örtlich verteilt angeordneter Reflektoren ist damit eine Anordnung z.B. gemäß der Lehre der DE 102 54 200 geschaffen worden.

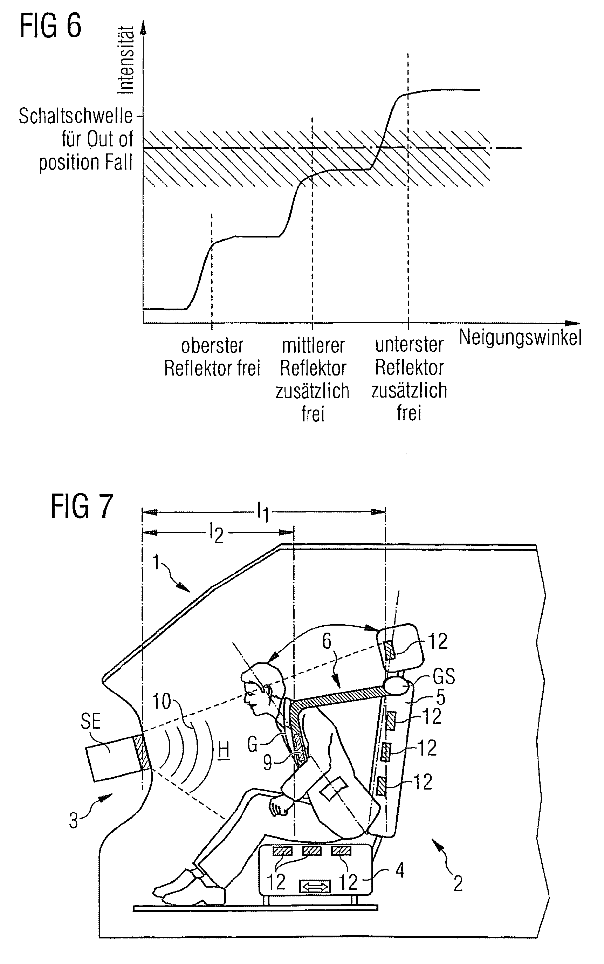

Durch fortschreitendes Vorbeugen etc. aus einer entspannten Sitzhaltung heraus werden die Reflektoren 12 des Sitzes 2 von Figur 5 fortschreitend durch den Körper einer auf dem Sitzplatz 2 sitzenden Person G freigegeben. Eine von der Sende- und Empfangseinheit SE in einer beispielhaft in Figur 4 darstellten Anordnung am Kraftfahrzeug 1 detektierte Intensitätsverteilung ist über einen jeweiligen Neigungswinkel des Oberkörpers der Person aufgetragen in der Abbildung von Figur 6 skizziert wiedergegeben.

In dem Diagramm von Figur 6 ist als gestrichelte Linie eine Schaltschwelle eingezeichnet. Diese Schaltschwelle wird zur definierten Unterscheidung einer noch tolerierbaren Sitzhaltung in Abgrenzung zu einem Out-of-Position-Fall herangezogen. Mehrfachreflexionen und sonstige Intensitätsschwankungen führen jedoch in dem schraffiert in dem Diagramm von Figur 6 dargestellten Bereich zu einer größeren Schwankungsbreite der Intensitätswerte. Unter der Voraussetzung des Einsatzes einer Basisausführung einer Vorrichtung nach der Lehre der DE 102 54 200 mit einfachen Reflektoren 12, die insbesondere nicht als modulierte Backscatter-Reflektoren ausgebildet sind, wird eine Messung in einem Out-of-Position-Fall gegenüber einem Nachweis einer Belegung des Sitzplatzes 2 durch eine Person mit leicht vorgebeugtem Oberkörper unscharf.

In vorteilhafter Weise sind diese bereits vorgeschlagenen Erkennungsverfahren jedoch mit einem unter Bezugnahme auf die Abbildungen der Figuren 2 und 3 beschriebenen erfindungsgemäßen Erkennungsverfahren kombinierbar, wie in dem Ausführungsbeispiel von Figur 7 in einer Darstellung analog der Figur 4 skizziert ist. In Figur 7 ist eine Out-of-Position-Situation zeichnerisch dargestellt, in der eine große Person auf dem Sitzplatz 2 sitzt und dabei ihren Oberkörper gegenüber einer normalen Sitzhaltung um einen Winkel deutlich geneigt hält. Die in der Abbildung von Figur 7 exemplarisch dargestellten vier Reflektoren 12 der Rückenlehne mit Kopfstütze sind in dieser Sitzhaltung soweit freigegeben, dass das Strahlungsfeld H bedingt durch direkten Zugang und/oder Beugungseffekte über die Reflektoren 12 Rücksignale höherer Intensität erzeugen wird. Drei Reflektoren 12 in der Sitzfläche 4 sind weiterhin abgedeckt, und der Sitzplatz 2 ist damit korrekt eingenommen worden. Durch die gleichzeitige Detektion einer von der erstgenannten Reflexion unterscheidbaren zweiten Reflexion, die durch Reflektoren 9 an dem Sicherheitsgurt 6 hervorgerufen wird, ist nun jedoch eine Sitzplatzbelegung in einer Out-of-Position-Situation eindeutig feststellbar. Von der Sende- und Empfangseinheit SE ausgehend kann auch über die Reflektoren 9 an dem Sicherheitsgurt 6 ein Neigungswinkel des Oberkörpers der Person abgeschätzt werden. Hier geschieht dies durch eine kombinierte Intensitäts- und Signallaufzeitmessung: Der Gurt 6 muss aufgrund einer gemessenen Signalintensität geschlossen sein, wobei sich der Gurt 6 in einem Abstand l₂ von der Sende- und Empfangseinheit SE befindet. Der Sitzplatz 2 ist dagegen eine Distanz l₁ von der Sende- und Empfangseinheit SE entfernt. Ein aufgenommenes Beugungsmuster zeigt, dass die Person diese Abstandsdifferenz durch ihren Körper nicht vollständig ausfüllt. Es handelt sich also nicht um einen sehr dicken Menschen. Damit wird die Zuverlässigkeit bei der Erkennung von Out-of-Position-Situationen durch die Kombination eines bekannten oder derzeit nur intern vorgeschlagenen Verfahrens mit einem erfindungsgemäßen Verfahren wesentlich gesteigert.

Zudem kann auch eine Abfrage, ob eine einen Sitzplatz 2 belegende Person angeschnallt ist, durch das gleiche System 3 durchgeführt werden. Sehr vorteilhaft ist bei dieser vorgestellten Lösung nach Figur 7, dass im Wesentlichen auf eine bereits vorhandene Infrastruktur zurückgegriffen wird, die ihrerseits in bereits eingangs erwähnter Weise auch schon für Zugangskontroll- und Fahrzeugstartsysteme in modernen Kraftfahrzeugen 1 verwendet wird. Damit ist für eine Umsetzung eines erfindungsgemäßen Verfahrens alleine oder auch in Kombination, wie anhand der Figur 7 vorstehend ausgeführt, nur eine Anordnung von zusätzlichen Reflektoren 9 an dem Sicherheitsgurt 6 bei Mitbenutzung vorhandener Systemkomponenten erforderlich. Ferner ist eine im vorliegenden Ausführungsbeispiel in der Steuereinheit S integrierte oder dieser nachgeschaltete Auswerteeinheit, um die vorstehend beschriebenen Funktionen zu erweitern.

Einem anhand der Figur 2 und 3 vorgestellten neuartigen Erkennungssystem 3 alleine, den unter Bezug auf die Figuren 4 bis 6 dargestellten bereits firmenintern vorgeschlagenen Erkennungssystemen, sowie einem sehr vorteilhaften Kombinationssystem nach Figur 7 ist gemeinsam, dass in sehr effizienter Weise unter Verwendung auch nur einer einzigen Sende- und Empfangseinheit SE ein hochfrequentes elektromagnetisches Wellenfeld H erzeugt wird, dass in einem Kraftfahrzeug als bevorzugtem Anwendungsfall alle zulässigen Sitzplätze 2 für Personen und/oder Lasten zur Detektion einer jeweiligen Belegung ausleuchtet. Die Sitzplätze 2 und/oder Sicherheitsgurte 6 sind dazu mit HOBBIT-Reflektoren 9, 12 ausgestattet, die der Offenbarung der DE 102 54 201 entsprechend als passive, semipassive, semiaktive oder auch als aktive modulierende Backscatter-Reflektoren sehr vorteilhaft ausgebildet sind.

Das Verhalten der HOBBIT-Reflektoren 9 ist unabhängig von einer jeweiligen Sitzplatzbelegung. Das beschriebene System schließt in Abhängigkeit davon, wie viel Pegel von einem HOBBIT-Reflektor 9, der sich auf einem Gurt 6 im Wellenfeld H oder in einem geometrischen Schatten der zu detektierenden Person befindet, moduliert reflektiert wird, auf die Belegung der einzelnen Sitze 2 und der Position und Gestalt G,K der Person auf dem jeweiligen Sitz 2. Durch die Modulation der Backscatter-Reflektoren 9 können die Rückstreuungen der einzelnen HOBBIT-Reflektoren 9 und damit die abzudeckenden Sitzplätze 2 in der Sende- und Empfangseinheit SE durch eine nicht weiter dargestellte Auswerteeinheit unterschieden werden. Demzufolge besteht keine Notwendigkeit einer elektrischen Verbindung zwischen der Sende- und Empfangseinheit SE und den einzelnen HOBBIT-Reflektoren. Der HOBBIT-Reflektor benötigt zudem keinerlei Informationen über den Zustand der Sende- und Empfangseinheit SE als HOBBIT-Basisstation und des Wellenfeldes H.

Da es sich bei den Reflektoren 9, 12 als so genannte HOBBIT-Reflektoren in bevorzugten Ausführungsformen der vorliegenden Erfindung in den dargestellten Ausführungsbeispielen um rein passive Bauelemente auf der Basis von Oberflächenquellen-Bauelementen für elektromagnetische Hochfrequenzanwendungen im Bereich von ca. 2,4 GHz oder ca. 24 GHz handelt, können diese auch bei einer erforderlichen Individualisierung, wie sie für eine Unterscheidbarkeit beispielsweise der einzelnen Sitzplätze erforderlich ist, in der Form von Folienelementen flexibel und preiswert in großtechnischen Prozessen hergestellt werden. Gerade die moderne Webtechnik ermöglicht dabei auch neben der Anordnung auf dem Material eines Sicherheitsgurtes oder dem Oberflächenmaterial eines Sitzplatzes 2 eine Integration in den betreffenden Materialien. Dabei wird vorteilhafterweise eine mechanisch spannungsfreie und auch insbesondere beim Aufwickeln durch einen Gurtstraffer wenig beanspruchte Anordnung in einer neutralen Faser des Gurtmaterials ermöglicht. Damit sind in vorteilhafter Weise neben einer Individualisierbarkeit bei überschaubaren Herstellungskosten auch ein flexibler Einsatz bei hoher Funktionssicherheit und ausreichender Langlebigkeit derartiger HOBBIT-Reflektoren 9, 12 gewährleistet.

Vorstehend wurde davon ausgegangen, dass der gesamte Innenraum der Fahrgastzelle eines Kraftfahrzeugs 1 durch ein Wellenfeld des Senders im Wesentlichen gleichmäßig gefüllt wird. Beugungen und Reflexionen unterstützen die Ausleuchtung. Alternativ wird in einem zeichnerisch nicht weiter dargestellten Ausführungsbeispiel ein Wellenfeld H in den genannten Frequenzbereichen durch die Verwendung sog. dielektrischer Strahler derart ausgebildet, dass definierte Hauptkeulen des Wellenfeldes H auf einen jeweils zu überwachenden Sitzplatz 2 innerhalb des Fahrzeugs 1 gerichtet werden. Die Strahlungscharakteristik einer derartigen Anordnung entspricht aufgrund dieser besonderen Strahlformung mit hier fünf Strahlungskeulen für die fünf Sitzplätze 2 eines Fahrzeugs 1 dann im wesentlichen dem, was in der Abbildung von Figur 1 skizziert dargestellt worden ist. Der Entwurf derartiger dielektrischer Strahler ist, wie aus der Radartechnik beispielsweise für Systeme zur elektronisch schwenkbarer Flugfeldüberwachung bekannt, in der Regel nur numerisch möglich und durch einen hohen Aufwand relativ teuer. Bei einem Einsatz in hohen Stückzahlen empfiehlt sich diese Ansatz jedoch aufgrund des robusten Aufbaus einer entsprechenden Sende- und Empfangseinheit SE sowie der vergleichsweise rationellen und damit insgesamt preiswerten Herstellung bei hoher Zuverlässigkeit.

Nachfolgend werden anhand dreier nicht weiter grafisch dargestellter Ausführungsbeispiele exemplarisch im Wesentlichen drei Anwendungsmöglichkeiten für derartige Systeme ohne Bezugnahme auf weitere zeichnerische Darstellungen beschrieben:

In einer ersten Anwendungsform dient ein nach vorstehend beschriebenen Merkmalen aufgebautes Erkennungssystem 3 der Ansteuerung für Komfortanwendungen in einem Kraftfahrzeug 1. Innerhalb eines komplexeren Gesamtsystems arbeitet ein Erkennungssystem 3 dabei zeitlich einem Zugangskontroll- und Fahrzeugstartsystem nachgeordnet. Das heißt, dass in einem ersten Schritt eine Berechtigung und Identifikation einer sich dem Kraftfahrzeug 1 nähernden Person anhand eines Codegebers bzw. Customer Identification Device, abgekürzt als CID bezeichnet, durchgeführt wird. Daraufhin wird durch eines der vorstehend beschriebenen Erkennungssysteme 3 nach der sicheren Belegung des Fahrersitzes das Hochfahren eines Navigationssystems und einer entsprechenden Cockpit-Beleuchtung veranlasst. Ferner wird mit dem Vorgang der Belegung des Sitzplatzes 2 bereits das Einschalten des Innenlichtes und/oder des Radios entsprechend den Voreinstellungen eines jeweils erkannten Fahrers vorgenommen. Nach dem Motorstart werden weitere Informationen an den Fahrer ausgegeben, wie vor allem die Information darüber, ob alle in dem Fahrzeug 1 befindlichen Personen angeschnallt sind. Mit dem Motorstart wurden bereits, wiederum unter Berücksichtigung individueller Einstellungen für einen jeweils erkannten Fahrer, neben einer Einstellung des Sitzplatzes 2 in Anpassung an gespeicherte körperliche Gegebenheiten des jeweiligen Fahrers eine Ausrichtung eines Innenspiegels sowie ein Ausfahren eines beim Verlassen des Fahrzeuges 1 zuvor automatisch eingefahrenen Außenspiegels veranlasst. Damit entfallen, basierend auf der Erkennung eines jeweiligen berechtigten Fahrers, alle derzeit noch händisch vor dem Start des Motors aus Sicherheitsgründen durchzuführende Einstellungsmaßnahmen, die durch aktive Anpassung eines jeweiligen Kraftfahrzeugs 1 auf die individuellen Gegebenheiten eines Fahrers aus Sicherheitsgründen in endlich vielen Versuchen bei Zeit- und/oder Kraftaufwand durchzuführen sind. Hierdurch wird neben der Betriebs- und Bediensicherheit eines Kraftfahrzeuges auch der Bedien- und Benutzungskomfort eines derartigen Kraftfahrzeugs 1 erheblich gesteigert.

Alternativ oder zusätzlich zu den vorstehend genannten Möglichkeiten wird durch eine vorstehend beschriebene Erkennungsvorrichtung 3 ein Zugangskontrollsystem, das als "Passive start and entry" bzw. abgekürzt als PASE bezeichnet wird, angesteuert. Der Zugang eines Benutzers zu einem mit PASE ausgerüsteten Kraftfahrzeug 1 erfordert bis zum Greifen eines Türgriffs oder einer vergleichbaren Vorrichtung keine zusätzliche aktive Handlung mehr, wie dies beispielsweise im Fall von Funkfernbedienungen heute noch der Fall ist. Beim Verlassen eines derartig ausgerüsteten Kraftfahrzeugs 1 wird durch die Erkennungsfunktion der Sitzplatzbelegung bzw. -freigabe ein automatisches Verriegeln dieses Fahrzeuges 1 nur dann ermöglicht, wenn alle Sitzplätze 2 innerhalb des Fahrzeugs nachweislich unbesetzt sind. Nur in diesem Fall wird automatisch eine sog. Walk away locking- bzw. WAL-Funktion ausgelöst. Im Anschluss hieran startet das Fahrzeug 1 automatisch eine durch Aussendung von elektromagnetischen Anforderungssignalen in Abständen durchgeführte Suche nach einem Codegeber CID. Hierdurch wird im Fall einer Wiederannäherung einer berechtigten Person ein Öffnen mit Entfernungs- und Positions-abhängigen Teilschritten bzw. Teilfunktionen vorbereitet.

Bei einem mit PASE alleine ausgerüsteten Fahrzeug wird unter Vermittlung einer vorstehend beschriebenen Einrichtung zur Sitzplatzbelegungserkennung bei Freigabe des Fahrersitzes automatisch eine elektronische Lenkradverriegelung ELV aktiviert.

Es ist somit in einer weiteren Ausführungsform der Erfindung folgendes Szenario in einem Kraftfahrzeug, das mit einem PASE-System ausgerüstet ist, in dem Fall möglich, dass ein Codegeber CID in dem Fahrzeuginnenraum detektiert wird und der Fahrersitz durch eine Vorrichtung 3 als belegt festgestellt wird: Die Beleuchtung eines Startknopfes wird zur Orientierung des Fahrers eingeschaltet. Ein Starten der Antriebsmaschine wird ermöglicht, wobei der Sitzplatz 2 des Fahrers, ein Lenkrad sowie Fußpedalpositionen in Abhängigkeit von abgelegten Voreinstellungen in Abhängigkeit von der Identifikation CID-ID des Codesignalgebers CID vorgenommen werden. Schließlich wird eine automatische Entriegelung der elektronischen Lenkradverriegelung ELV veranlasst.

Nach dem Stand der Technik sind vorstehende Maßnahmen nur in unzureichender Form ausführbar. Ein aktuell sehr hoher Energiebedarf macht eine Auswertung einer jeweiligen Sitzplatzbelegung erst bei laufendem Motor möglich. Zudem weisen die Auswertevorrichtungen zur Feststellung einer Sitzplatzbelegung sehr lange Antwortzeiten auf. Nach dem Anschalten des Motors vergehen bis zu 14 s, bis das Fahrzeug den Sitzplatzbelegungszustand erfasst hat, um dementsprechend auch z.B. einen Airbag auslösen zu können. Damit sind auch viele Standard-Situationen, wie z.B. das Ausparken aus einer Parklücke an einer Straßenseite mit zügigem Einfädeln in einen fließenden Verkehr, nicht von der erwünschten geregelten Beeinflussung eines Auslösungsverhaltens der Airbags etc. erfassbar.

Nach Ausführungsformen der vorliegenden Erfindung wird hingegen nun bei sehr geringem Energiebedarf eine Auswertung vorgenommen, deren Zeitbedarf im Bereich von Millisekunden liegt. Zudem kann die Auswertung auch in jedem Fall vor dem Start des Motors vorgenommen werden. Eine Aktivierung einer bei Bedarf fortlaufend aktiven Sitzplatzbelegungserkennung kann damit z.B. mit einer Türentriegelung erfolgen. Damit könnte das System die Sitzplätze vor dem Anlassen des Motors vom Öffnen einer Fahrzeugtür an aktiv beobachten. Somit ist ein neues Sicherheitsmerkmal realisiert worden: Die Freigabe von Motorstart-Funktionen und/oder Lenkradverriegelung erfolgt unter der Voraussetzung, dass der Fahrersitz von einer erwachsenen Person als eingenommen detektiert worden ist und ein Codegeber CID im Innenraum vorhanden ist, der die Zugangs- und Startberechtigung kontaktlos nachweist.

Schließlich kann ein vorstehend beschriebenes Erkennungssystem 3 auch als Informationsquelle für Sicherheitsanwendungen genutzt werden. Neben der vorstehend schon unter Bezug auf spezielle Sicherheitseinstellungen von Airbag- Sicherheitssystemen in Out-of-Position-Situationen angesprochenen Sondermaßnahmen, beispielsweise bei Erkennung eines freien Sitzplatzes, der Erkennung eines Kindes oder Kleinstkindes als Fahrgast, wird eine Kalibrierung eines Gurtstraffers bei ordnungsgemäß belegtem Sitz und einer entspannten Sitzhaltung durchgeführt, bei der sich der Fahrgast an die Rückenlehne anlehnt. Wie bereits vorstehend zu den Abbildungen der Figur 2 und 3 ausgeführt, ist es unter Verwendung von HOBBIT-Backscatter-Reflektoren 9 in dem Sicherheitsgurt 6 möglich, auch weitergehende Informationen über die Position und die Statur eines auf einem jeweiligen Sitzplatz 2 sitzenden Menschen an sicherheitsrelevante Teilsysteme weiterzugeben bzw. für diese in aufbereitete Art und Weise bereitzustellen. Hierzu zählt unter anderem eine in Abhängigkeit von der Statur einer jeweils zu schützenden Person durchzuführende Höheneinstellung eines Gurt-Aufrollmechanismus.

Ausgehend von einem Zugangskontroll- und Berechtigungs- Abfragesystem, wie dies bereits bei aktuellen Kraftfahrzeugen sehr häufig vorhanden ist, wird im Rahmen der vorstehend beschriebenen und teilweise auch unter Bezug auf Figuren der Zeichnung dargestellten Ausführungsbeispiele ein sehr energieschonendes, effizientes und zuverlässig arbeitendes System zur Erkennung der Belegung von Sitzplätzen 2 innerhalb eines Kraftfahrzeug 1 vorgeschlagen. Bei geringfügiger Erweiterung der bereits vorhandenen Infrastruktur bzw. Hardware in dem Innenraum des Kraftfahrzeugs 1 werden wesentlich zuverlässigere Informationen bereitgestellt. Durch eine Erweiterung der Auswerte- und Analysefähigkeiten einer Sende- und Empfangseinheit SE können die gerade diskutierten Anwendungsmöglichkeiten alternativ oder auch kumulativ zur Steigerung der Sicherheit von Personen in dem Fahrzeug, wie auch für reine Komfortanwendungen herangezogen werden. Die Kosten für zusätzliche Hardware sind dabei im Wesentlichen auf das Anbringen zusätzlicher Reflektoren 9 und die Steuereinrichtung S beschränkt, die jedoch bereits in Sicherheitsvorrichtungen der vorstehend genannten Art als Bauteil vorgesehen ist. Eine Nachrüstung kann daher auch in Form eines Austausches eines standardisierten elektronischen Bauteils vorgenommen werden.

## Patentansprüche

1. Verfahren zum Erkennen der Sitzbelegung in einem Fahrzeug (1), bei dem hochfrequente Strahlung auf einen Sitz (2) ausgesendet wird und die Hochfrequenzstrahlung in Abhängigkeit von einer Belegung zu einem Empfänger (E) übertragen und hinsichtlich einer Strahlungsintensität ausgewertet wird,
**dadurch gekennzeichnet,**
**dass** in einem Fahrzeug (1) mit mehreren zu überwachenden Sitzplätzen (2)
durch nur eine Sendereinheit ein Wellenfeld (H) ausgesendet und über eine Empfangseinheit aufgenommen in einer Steuereinheit (S) zur Feststellung einer jeweiligen Sitzplatzbelegung ausgewertet wird.

2. Verfahren nach Anspruch 1,
**dadurch gekennzeichnet, dass** jedem der Sitzplätze (2) jeweils mindestens ein von anderen Reflektoren (9, 12) unterscheidbarer Reflektor (9, 12) zugeordnet wird.

3. Verfahren nach einem der beiden vorhergehenden Ansprüche,
**dadurch gekennzeichnet, dass** die Unterscheidbarkeit durch modulierte Reflexion und/oder Ein- und Ausschalten der Reflektoren (9, 12) in Zeitabschnitten und/oder Verschwenkung einer Strahlrichtung des Wellenfeldes (H) erreicht wird.

4. Verfahren nach einem der vorhergehenden Ansprüche,
**dadurch gekennzeichnet, dass** je Sitzplatz mindestens ein Reflektor (9) in oder an einem zugehörigen Sicherheitsgurt (6) angeordnet und beim Schließen des Gurtes (6) in eine Position eines von dem hochfrequente Sendereinheit ausgehenden Wellenfeldes (H) hineinbewegt wird, in welcher der mindestens eine Reflektor (9) wesentlich mehr elektromagnetische Hochfrequenzenergie empfängt und dementsprechend zurücksendet, als in einer geöffneten Passivlage des Gurtes (6).

5. Verfahren nach dem vorhergehenden Anspruch,
**dadurch gekennzeichnet, dass** der Gurt (6) in einer geöffneten Passivlage im Wesentlichen in einen elektromagnetisch geschirmten Bereich eingezogen und/oder aufgerollt wird, insbesondere in einen Gurtstraffer (GS).

6. Verfahren nach einem der beiden vorhergehenden Ansprüche,
**dadurch gekennzeichnet, dass** dieses Verfahren alternativ oder in Kombination mit mindestens einem anderen Verfahren zur Feststellung einer Belegung eines Sitzplatzes durchgeführt wird, bei dem Reflektoren (12) in und/oder an einem Sitzfläche (4), einer Rückenlehne (5) und/oder Kopfstütze des Sitzplatzes (2) angeordnet werden.

7. Verfahren nach einem der vorhergehenden Ansprüche,
**dadurch gekennzeichnet, dass** das Verfahren in Kombination mit einem Verfahren zur Zugangskontrolle und/oder zum Fahrzeugstart durchgeführt wird, insbesondere in Intervallen und/oder nach Auslösung durch einen PreCrash-Sensor oder ein ähnliches Unfall-Vorwarnungssystem.

8. Verfahren nach einem der vorhergehenden Ansprüche,
**dadurch gekennzeichnet, dass** mit mindestens einem Ergebnis- oder Ausgangssignal des Verfahrens eine Ansteuerung von Komfortanwendungen in einem Fahrzeug (1) bewirkt wird.

9. Verfahren nach einem der vorhergehenden Ansprüche,
**dadurch gekennzeichnet, dass** mit mindestens einem Ergebnis- oder Ausgangssignal des Verfahrens eine Ansteuerung für eine komfortable Bedienung in einem passiven Zugangskontroll- und Startsystem in einem Fahrzeug (1) bewirkt wird, insbesondere eine Freigabe von Motorstart-Funktionen und/oder einer Lenkradverriegelung, die nur unter der Voraussetzung erfolgt, dass der Fahrersitz (2) von einer erwachsenen Person als eingenommen detektiert worden ist und ein Codegeber (CID) im Innenraum vorhanden ist, der die Zugangs- und Startberechtigung kontaktlos nachweist.

10. Verfahren nach einem der vorhergehenden Ansprüche,
**dadurch gekennzeichnet, dass** mindestens ein Ergebnis- oder Ausgangssignal des Verfahrens als Informationsquelle für Sicherheitsanwendungen verarbeitet wird, insbesondere zur Ansteuerung eines Airbag-Systems, eines Gurtstraffers (GS) und/oder zur Einstellung einer Kopfstütze.

11. System zum Erkennen der Sitzbelegung in einem Fahrzeug (1) mit einer Steuereinheit (S) zur Ansteuerung der Erzeugung eines hochfrequenten Wellenfeldes (H) und Auswertung einer in Abhängigkeit von einer Belegung zu einem Empfänger übertragen Strahlungsintensität,
**dadurch gekennzeichnet,**
**dass** nur eine Sendereinheit vorgesehen ist, um ein Wellenfeld (H) zur Feststellung einer jeweiligen Sitzplatzbelegung in einem Fahrzeug (1) mit mehreren zu überwachenden Sitzplätzen (2) bereitzustellen und die hochfrequente Sendereinheit zum Aussenden hochfrequenter Strahlung auf einen jeweiligen Sitzplatz (2) ausgerichtet ist, wobei im Bereich des Sitzplatzes (2) Reflektorelemente (9,12) zum Reflektieren der hochfrequenten Strahlung in Abhängigkeit von einer Belegung in eine Empfangseinheit angeordnet sind, und die Sendereinheit und die Empfangseinheit mit einer Steuereinheit (S) zur Ansteuerung und/oder Signalauswertung hinsichtlich einer Strahlungsintensität verbunden sind.

12. System nach dem vorhergehenden Anspruch,
**dadurch gekennzeichnet, dass** jedem der Sitzplätze (2) jeweils mindestens ein von anderen Reflektoren (9, 12) unterscheidbarer Reflektor (9, 12) zugeordnet ist.

13. System nach einem der beiden vorhergehenden Ansprüche,
**dadurch gekennzeichnet, dass** je Sitzplatz (2) mindestens ein Reflektor (9) in oder an einem zugehörigen Sicherheitsgurt (6) angeordnet ist.

14. System nach einem der vorhergehenden Ansprüche 11 bis 13,
**dadurch gekennzeichnet, dass** das System (3) zur Umsetzung eines Verfahrens nach einem oder mehreren der vorstehenden Ansprüche 1 bis 10 ausgebildet ist.

15. System nach einem der vorhergehenden Ansprüche 11 bis 14,
**dadurch gekennzeichnet, dass** die gegenüber bekannten Systemen zusätzlich erforderliche Hardware im Wesentlichen in der Steuereinrichtung (S) zusammengefasst ist.

## Claims

1. Method for identifying seat occupancy in a vehicle (1), in which high-frequency radiation is emitted to a seat (2) and the high-frequency radiation is transmitted to a receiver (E) as a function of occupancy and evaluated in respect of radiation intensity,
**characterised in that**
in a vehicle (1) with a plurality of seats (2) to be monitored,
a wave field (H) is emitted by just one transmit unit and received in a control unit (S) via a receive unit to determine occupancy of a respective seat.

2. Method according to claim 1,
**characterised in that** at least one reflector (9, 12) that can be distinguished from other reflectors (9, 12) is assigned respectively to each of the seats (2).

3. Method according to one of the two preceding claims,
**characterised in that** the ability to make a distinction is achieved by modulated reflection and/or switching the reflectors (9, 12) on and off at time intervals and/or changing a beam direction of the wave field (H).

4. Method according to one of the preceding claims,
**characterised in that** at least one reflector (9) is arranged in or on an associated seatbelt (6) for each seat and when the belt (6) is fastened, said reflector (9) is moved into a position in a wave field (H) emitted by the high-frequency transmit unit, in which the at least one reflector (9) receives and correspondingly transmits back significantly more electromagnetic high-frequency energy than when the belt (6) is in an open passive position.

5. Method according to the preceding claim,
**characterised in that** in an open passive position the belt (6) is essentially drawn and/or retracted into an electromagnetically screened area, in particular into a belt tensioner (GS).

6. Method according to one of the two preceding claims,
**characterised in that** this method is implemented as an alternative to or in combination with at least one other method for determining occupancy of a seat, in which reflectors (12) are arranged in and/or on a seat surface (4), a backrest (5) and/or a headrest of the seat (2).

7. Method according to one of the preceding claims,
**characterised in that** the method is implemented in combination with a method for access control and/or for starting the vehicle, in particular at intervals and/or after activation by a pre-crash sensor or similar accident early warning system.

8. Method according to one of the preceding claims,
**characterised in that** the comfort applications in a vehicle (1) are activated with at least one result or output signal of the method.

9. Method according to one of the preceding claims,
**characterised in that** user-friendly operation in a passive access control and start system in a vehicle (1) is activated with at least one result and/or output signal of the method, in particular the release of engine start functions and/or a steering wheel lock, which only takes place if the driving seat (2) is detected as being occupied by an adult and a customer identification device (CID) is present in the interior, demonstrating access and start authorisation in a contactless fashion.

10. Method according to one of the preceding claims,
**characterised in that** at least one result or output signal of the method is processed as an information source for safety applications, in particular to activate an airbag system, a belt tensioner (GS) and/or to adjust a headrest.

11. System for identifying seat occupancy in a vehicle (1) with a control unit (S) to activate the generation of a high-frequency wave field (H) and to evaluate a radiation intensity transmitted as a function of occupancy to a receiver,
**characterised in that**
only one transmit unit is provided to provide a wave field (H) to determine occupancy of a respective seat in a vehicle (1) with a plurality of seats (2) to be monitored and
the high-frequency transmit unit is aligned to emit high-frequency radiation to a respective seat (2), with reflector elements (9, 12) being arranged in the area of a seat (2) to reflect the high-frequency radiation as a function of occupancy to a receive unit and the transmit unit and the receive unit being connected to a control unit (S) for activations purposes and/or to evaluate signals in respect of radiation intensity.

12. System according to the preceding claim,
**characterised in that** at least one reflector (9, 12) that can be distinguished from other reflectors (9, 12) is assigned respectively to each of the seats (2).

13. System according to one of the two preceding claims,
**characterised in that** at least one reflector (9) is arranged in or on an associated seatbelt (6) for each seat (2).

14. System according to one of the preceding claims 11 to 13,
**characterised in that** the system (3) is configured to implement a method according to one or more of the above claims 1 to 10.

15. System according to one of the preceding claims 11 to 14,
**characterised in that** the additional hardware required compared with known systems is essentially combined in the control device (S).

## Revendications

1. Procédé d'identification de l'occupation des sièges dans un véhicule
(1), dans lequel un rayonnement haute fréquence est émis sur un siège (2) et le rayonnement haute fréquence est transmis vers un récepteur (E), en fonction d'une occupation, et évalué au niveau d'une intensité de rayonnement,
**caractérisé en ce que** dans un véhicule (1) avec plusieurs places assises (2) à surveiller, un champ ondulatoire (H) n'est émis que par une unité émettrice et réceptionné par une unité réceptrice, et évalué dans une unité de commande (S), pour constater une occupation de siège respective.

2. Procédé selon la revendication 1,
**caractérisé en ce qu'**au moins chaque fois un réflecteur (9, 12) différenciable d'autres réflecteurs (9, 12) est associé à chacune des places assises (2).

3. Procédé selon l'une quelconque des deux revendications précédentes,
**caractérisé en ce que** l'aptitude de différenciation est obtenue par réflexion modulée et/ou par connexion et déconnexion des réflecteurs (9, 12) dans des intervalles de temps et/ou par pivotement d'une direction de rayonnement du champ ondulatoire (H).

4. Procédé selon l'une quelconque des deux revendications précédentes,
**caractérisé en ce que** pour chaque place assise, au moins un réflecteur (9) est placé dans ou sur une ceinture de sécurité (6) correspondante et **en ce que** lors de la fermeture de la ceinture (6), il est déplacé dans une position d'un champ ondulatoire (H) émanant de l'unité émettrice haute fréquence, dans laquelle le au moins un réflecteur (9) réceptionne et retransmet en conséquence nettement plus d'énergie électromagnétique haute fréquence que dans une position passive de la ceinture (6).

5. Procédé selon la revendication précédente,
**caractérisé en ce que**, dans une position passive ouverte, la ceinture (6) est introduite sensiblement dans une zone blindée du point de vue électromagnétique et/ou enroulée, notamment par un tendeur de ceinture (GS).

6. Procédé selon l'une quelconque des deux revendications précédentes,
**caractérisé en ce que** ledit procédé est réalisé en variante ou en combinaison avec au moins un autre procédé pour constater l'occupation d'une place assise, selon lequel on place des réflecteurs (12) dans et/ou sur une surface d'assise (4), un dossier (5) et /ou un appuie-tête de la place assise (2).

7. Procédé selon l'une quelconque des revendications précédentes,
**caractérisé en ce que** le procédé est réalisé en combinaison avec un procédé de contrôle d'accès et/ou de démarrage de véhicule, notamment à des intervalles et/ou après déclenchement d'un capteur de pré-crash ou d'un système analogue de prévention des accidents.

8. Procédé selon l'une quelconque des revendications précédentes,
**caractérisé en ce que**, avec au moins un signal de résultat ou de sortie du procédé, une activation d'applications de confort est provoquée dans un véhicule automobile (1).

9. Procédé selon l'une quelconque des revendications précédentes,
**caractérisé en ce que**, avec au moins un signal de résultat ou de sortie du procédé, une activation pour une commande confortable est provoquée dans un système d'accès ou de démarrage passif dans un véhicule (1), notamment une validation de fonctions de démarrage du moteur et/ou un verrouillage de volant, qui n'est assurée qu'à condition que le siège conducteur (2) soit détecté comme étant occupé par une personne adulte et qu'un transmetteur de codes (CID) qui justifie sans contact l'autorisation d'accès et de démarrage soit présent dans l'habitacle.

10. Procédé selon l'une quelconque des revendications précédentes,
**caractérisé en ce que**, au moins un signal de résultat ou de sortie du procédé est traité en tant que source d'informations pour des applications de sécurité, notamment pour l'activation d'un système d'airbag, d'un tendeur de ceinture (GS) et/ou pour le réglage d'un appuie-tête.

11. Système d'identification de l'occupation des sièges dans un véhicule
(1) comprenant une unité de commande (S) pour l'activation de la génération d'un champ ondulatoire (H) haute fréquence et pour l'évaluation d'une intensité de rayonnement transmise vers un récepteur, en fonction d'une occupation,
**caractérisé en ce qu'**il ne comporte qu'une seule unité émettrice, pour mettre à disposition un champ ondulatoire, (H) pour la constatation d'une occupation respective des sièges dans un véhicule (1) avec plusieurs places assises (2) à surveiller, et **en ce que**, pour émettre un rayonnement haute fréquence, l'unité émettrice haute fréquence est orientée sur une place assise (2) concernée, alors que dans la zone de la place assise (2), des éléments réflecteurs (9,12) sont placés dans une unité réceptrice, pour réfléchir le rayonnement haute fréquence en fonction d'une occupation et **en ce que** l'unité réceptrice est reliée avec une unité de commande (S), pour l'activation et/ou pour l'évaluation de signaux au niveau d'une intensité de rayonnement.

12. Système selon la revendication précédente,
**caractérisé en ce que** chaque fois au moins un réflecteur (9, 12) différenciable d'autres réflecteurs (9, 12) est associé à chacune des places assises (2).

13. Procédé selon l'une quelconque des deux revendications précédentes,
**caractérisé en ce que**, pour chaque place assise (2), au moins un réflecteur (9) est placé dans ou sur une ceinture de sécurité (6) correspondante.

14. Procédé selon l'une quelconque des revendications précédentes 11 à 13,
**caractérisé en ce que** le système (3) est conçu pour la mise en oeuvre d'un procédé selon l'une quelconque ou plusieurs des revendications 1 à 10.

15. Procédé selon l'une quelconque des revendications précédentes 11 à 14,
**caractérisé en ce que** le matériel supplémentaire nécessaire par rapport à des systèmes connus est sensiblement regroupé dans le dispositif de commande (S).
